# EUROPEAN PATENT SPECIFICATION

(11) **EP 1 855 417 B1**
(45) Date of publication and mention of the grant of the patent: **11.08.2010**
(21) Application number: 06300460.0
(22) Date of filing: 11.05.2006
(51) Int. Cl.: H04W 36/14

(54) **Wireless network coverage area advertisement**
Werbung für die Abdeckung eines drahtlosen Netzes
Publicité pour une zone de couverture d'un réseau sans fil

(43) Date of publication of application: 14.11.2007
(73) Proprietor: Motorola, Inc., A Corporation of the State of Delaware, Schaumburg, IL 60196 (US)
(72) Inventor: Ribeiro Dias Alexandre, 31400, TOULOUSE (FR); Bon, Frédéric, 31410, LAVERNOSE (FR); Durand, Christophe, 31000, TOULOUSE (FR); Elicegui, Lucas, 31500, TOULOUSE (FR)
(74) Representative: Delumeau, François Guy

(56) References cited:
- WO-A-2004/077751
- US-A1- 2004 137 902
- US-A1- 2005 048 972
- US-A1- 2005 048 977

## Description

### Field

The present application relates to radio access technology (RAT), and more particularly to the access of multiple RATs by using multi-mode terminals.

### BACKGROUND

Radio Access Technologies (RAT), such as GSM/EGPRS, W-CDMA, Bluetooth, WiFi (802.11 networks), WiMax (802.16), and UWB, can be accessed via multi-mode terminals. Often, these multimode terminals are also mobile terminals, which users employ to move from one coverage area to another coverage area. When a user moves from one coverage area to another coverage area, it is desirable for the mobile terminal to achieve handoff from one RAT to another without interruption, i.e. in a seamless manner.

In order to achieve handoff from one RAT to another, the MT needs to collect information to register on both RATs. This is typically done in two ways. In the first way, the MT monitors both RATs at the same time. A drawback of this approach is that it is highly power consuming and results in low battery life. In the second way, each RAT advertises all required information to the other RATs. A drawback of this approach is that it requires tight interconnection between different RATs, which is highly complex and not realistic since different RATs are usually not synchronized and know very little about each other. Accordingly, what is needed is a wireless network coverage area advertisement to aid in the handover from one network to another network.

Other examples of wireless network coverage areas are given by the prior art documents US20040137902 and US20050048972.

### SUMMARY

The present invention is defined according to the appended set of claims. In one embodiment a method is provided. A plurality of cells, within a wireless network coverage area, are provided. An information element is broadcast to at least one of the cells, wherein the information element identifies a position of the cell relative to the wireless network coverage area.

In one embodiment, information is received from at least one mobile device within the coverage area. The information is utilized to determine the position of the cell relative to the wireless network coverage area. In one example, the information is an indicator from the mobile device as to whether the mobile device was associated with another cell within the wireless network coverage area prior to associating with the cell. In another example, the information is an indicator from the mobile device as to whether the mobile device was associated with another wireless network coverage area prior to associating with the cell. In a further example, information is received from a deployment database that includes geographical information related to the access point and the information is utilized to determine the position of the cell relative to the wireless network coverage area.

In one embodiment, an access point is provided that transmits wireless signals to the cell. The information element is sent to the access point for later broadcast to the at least one cell.

In one embodiment, a plurality of access points are provided. Each access point transmits wireless signals to a corresponding one of the plurality of cells. A notification is received that one of the access points has broken down. The notification is utilized to determine the position of the cell relative to the wireless network coverage area.

In one embodiment, a method is provided. Communication is established with a cell within a first wireless network. An information element is received that identifies a relative location of the cell within the first wireless network. The information element is utilized to determine whether or not to monitor a second wireless network. In one example, monitoring of the second wireless network occurs in response to a determination that the cell is located in a predetermined area of the first wireless network.

In one embodiment, it is determined that the cell is located in a peripheral area of the first wireless network. Monitoring the second wireless network comprises registering with the second wireless network. Utilizing the information element comprises determining not to establish communication with the second wireless network in response to a determination that the cell is not located in a predetermined area of the first wireless network.

In one embodiment, an indicator is sent to an access point servicing the cell notifying the access point of previous association with another cell or another wireless network.

In one embodiment, a network is provided. The network includes a wireless network coverage area including at least one cell. At least one network access point provides wireless service to the at least one cell. The at least one network access point is configured to broadcast an information element identifying a position of the cell relative to the wireless network coverage area.

In one embodiment, the network access point is configured to receive information from at least one mobile device within the coverage area to utilize the information to determine the position of the cell relative to the wireless network coverage area. In one embodiment, the network access point is further configured to receive an indicator from the mobile device as to whether the mobile device was associated with another cell within the wireless network coverage area prior to associating with the cell. In one embodiment, the network access point is further configured to receive an indicator from the mobile device as to whether the mobile device was associated with another wireless network coverage area prior to associating with the cell.

In one embodiment, a management server sends the information element to the access point for broadcast by the access point. In one embodiment, a deployment database includes geographical information related to the access point. The management server is configured to receive the geographical information from the deployment database and utilize the geographical information to determine the position of the cell relative to the wireless network coverage area. In one embodiment, the at least one cell comprises a plurality of cells and the at least one access point comprises a plurality of access points. The management server is configured to receive a notification if one of the access points breaks down and to utilize the notification to determine the position of the cell relative to the wireless network coverage area.

In one embodiment, a mobile communications device is provided. The device includes an interface to connect the mobile device to a plurality of wireless networks. A processor is coupled to the interface. The processor is operable to receive an information element that identifies a relative location of a cell within one wireless network and to utilize the information element to determine whether or not to monitor another wireless network.

In one embodiment, the processor is operable to determine to monitor the second wireless network in response to a determination that the cell is located in a predetermined area of the one wireless network. In one embodiment, the processor is operable to determine to monitor the second wireless network in response to a determination that the cell is located in a peripheral area of the one wireless network.

In one embodiment, the processor is operable to register with the other wireless network in response to a determination that cell is located in a predetermined area of the one wireless network. In one embodiment, the processor is operable to determine not to monitor the other wireless network in response to a determination that the cell is not located in a predetermined area of the one wireless network. In one embodiment, the processor is operable to send an indicator to an access point servicing the cell notifying the access point of previous association with another cell or wireless network.

### BRIEF DESCRIPTION OF THE DRAWINGS

For the purpose of facilitating an understanding of the subject matter sought to be protected, there are illustrative embodiments in the accompanying drawing, from an inspection of which, when considered in connection with the following description and claims, the subject matter sought to be protected, its construction and operation, and many of its advantages should be readily understood and appreciated.

Fig. 1 depicts an exemplary embodiment of a wireless device in communication with a RAT access point.

Fig. 2 depicts a wireless device in proximity to a first RAT network coverage area and a second RAT network coverage area that is overlapping the first RAT coverage area.

Fig. 3 depicts an exemplary embodiment of a mapping of a RAT network topology based on proximity to the edge of the coverage area.

Fig. 4 depicts an exemplary embodiment of a RAT network in which a Remote Management Server is utilized to generate network coverage area advertisements.

Fig. 5 is a flow chart depicting an exemplary methodology by which an access point can generate a network coverage area advertisement.

### DETAILED DESCRIPTION

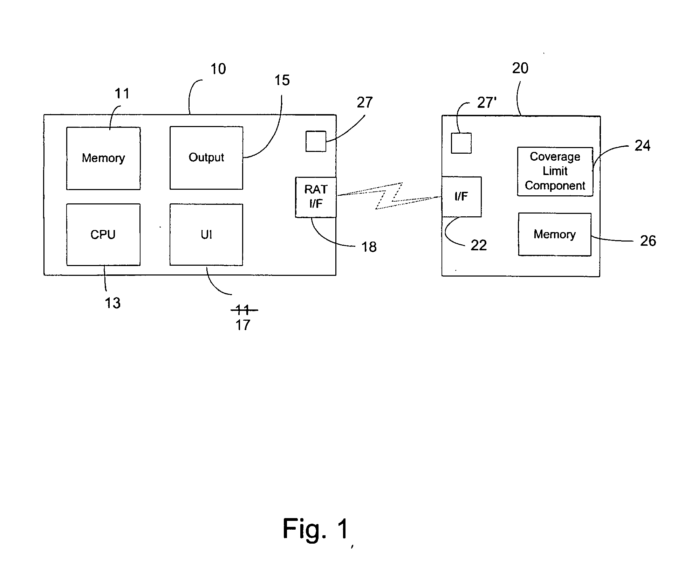

Referring to Fig. 1, an exemplary embodiment of a wireless device 10 and an access point (AP) 20 are provided for illustrative purposes.

Examples of wireless device 10 include, but are not limited to, cellular phones, mobile phones, pagers, radios, personal digital assistants (PDAs), mobile data terminals, application specific gaming devices, video gaming devices incorporating wireless modems, and combinations or subcombinations of these devices. The design and operation of these devices is well known so a detailed description of each will be omitted. Nevertheless, for illustrative purposes, wireless device 10 is shown to include exemplary components, such as a memory 11, a processor 13, at least one output device 15, a user interface (UI) 17, and a RAT interface 18. A brief description of each component will now be provided.

Memory 11 provides storage in which data, instructions, software routines, code sets, databases, etc. can be stored. Processor 13 governs the wireless device 10 and carries out the core functionality of the wireless device 13. For instance, if wireless device 10 were a mobile telephone, processor 13 would be capable of functions such as receiving input from a user, converting it to a suitable format, transmitting it over RAT interface 18, and the like. If wireless device 10 were a PDA, processor 13 would be capable of functions such as executing applications, receiving user input, generating device output, and the like. Examples of output device 15 include, but are not limited to, speakers, displays, tactile indicators, etc. Examples, of UI 17 include, but are not limited to, keyboards, touch screens, microphones, etc. RAT interface 18 connects wireless device 10 to a RAT network, typically through an access point 20. Accordingly, RAT interface 18 includes components (e.g. a transmitter, a receiver, an antenna, etc.) that are suitable for sending data to and receiving data from AP 20.

Referring further to Fig. 1, AP 20 in one example connects wireless communication devices together in a network. AP 20 can also connect wireless devices to a wired network (not shown) and/or to other wireless networks. Examples of AP 20, include WiFi access points, base stations, wireless routers, etc. The design and operation of these devices is well known so a detailed description of each will be omitted. Nevertheless, for exemplary purposes, AP 20 is shown to include a wireless interface 22, a coverage limit component 24, and memory 26. Wireless interface 22 connects AP 20 to the wireless devices with which it is in contact. Accordingly, wireless interface 22 typically includes components such as a transmitter, a receiver, and an antenna. Coverage limit component 24 in one example comprises software and/or hardware that is utilized to generate a coverage limit information element which is broadcast to wireless devices associated with access point 20. Memory 26 stores data that is needed in the operation of AP 20.

Further referring to Fig. 1, it should be understood that the components of wireless device 10 and AP 20 are formed of one or more computer software and/or hardware components. A number of such components can be combined or divided. In one example, an exemplary component of each device employs and/or comprises a series of computer instructions written in or implemented with any of a number of programming languages, as will be appreciated by those skilled in the art.

In a further example, wireless device 10 and AP 20 each employ at least one computer-readable signal-bearing medium 27, 27'. An example of a computer-readable signal-bearing medium 27, 27' is a recordable data storage medium such as a magnetic, optical, and/or atomic scale data storage medium. In another example, a computer-readable signal-bearing medium is a modulated carrier signal transmitted over a network coupled to wireless device 10 or AP 20. A computer-readable signal-bearing medium 25, 25' can store software and/or logic components that are employable to carry out the functionality described herein.

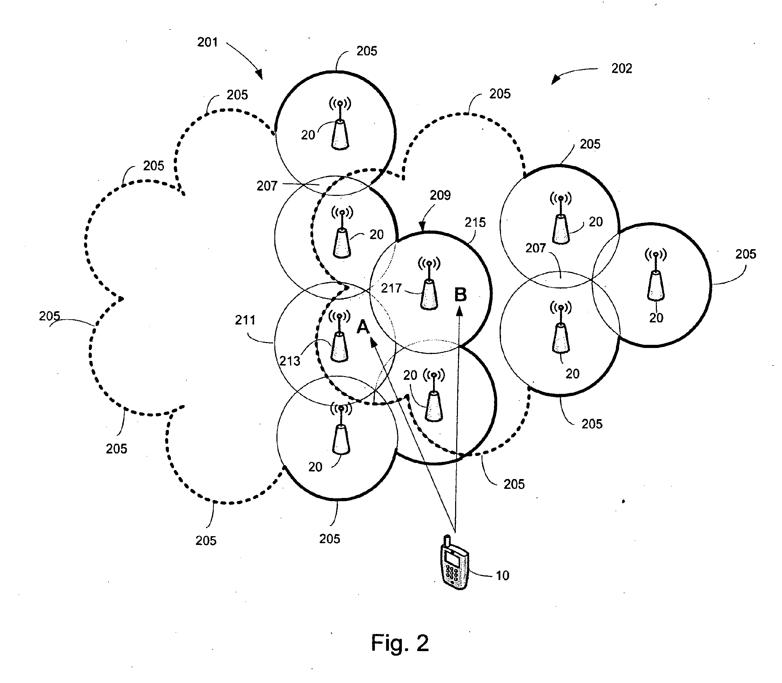

Referring to Fig. 2, a wireless device 10 is shown in proximity to a first wireless coverage area 201 and a second wireless coverage area 202. Examples of wireless coverage areas 201, 202 include, but are not limited to, WiFi (802.11) networks, GSM/GPRS/EGPRS networks (referred to hereinafter as GERAN), W-CDMA networks, CDMA networks, Bluetooth coverage areas, UWB networks, etc. For ease of explanation, the first coverage area 201 will often be referred to herein as a WiFi network and the second coverage area 202 will often be referred to as a GERAN network.

Referring further to Fig. 2, both the first wireless coverage area 201 and the second wireless coverage area 202 include a plurality of cells 205. Each cell 205 is serviced by a corresponding AP 20. APs 20 provide wireless signals (e.g. beacon signals, voice data, multimedia data, control signals, etc.) to wireless units within each corresponding cell 205. Many of the cells 205 overlap with each other, thereby producing overlapping cell areas 207.

In addition, wireless coverage area 201 and wireless coverage area 202 also overlap with each other, thereby creating an overlapping network area 209 (shown hatched) in which wireless device 10 can access either network. For instance, if wireless coverage area 201 were a WiFi network and wireless coverage area 202 were a GERAN network, then wireless device 10 could access either network, provided RAT interface 18 included both a WiFi interface and a GERAN interface. Such an overlapping network area 209 is useful because if device 10 were to travel from the WiFi network to the GERAN network, the overlapping network area 209 would allow the device 10 to register with the GERAN network prior to leaving the WiFi network, thereby achieving a seamless transition from one network to the other.

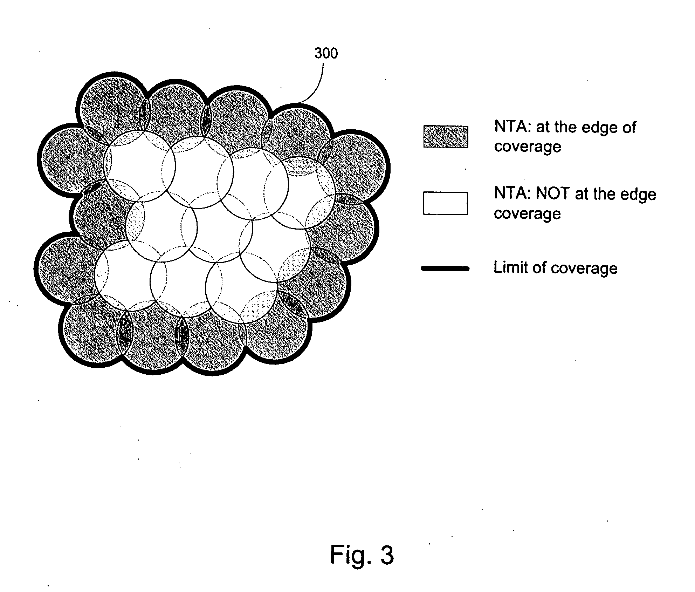

However, if the device 10 does not intend to leave the WiFi network or is not in danger of leaving the WiFi network, there is no need for the device to monitor or register with the GERAN network, Accordingly, each AP 20 broadcasts an information element to its corresponding cell 205. The information element identifies the location or position of the cell relative to the wireless coverage area. For example, referring to Fig. 3, a wireless coverage area 300 is shown in which each cell 205 is designated as either being "at the edge of the coverage area" or "not at the edge of the coverage area." The APs 20 corresponding to those cells 205 that are shown shaded broadcast information elements indicating that the cells are at the edge of the coverage area 300. The APs 20 corresponding to those cells 205, which are shown as not shaded, broadcast information elements indicating that the cells are not at the edge of the coverage area 300. Upon receiving an information element, a device 10 becomes aware of the relative location of its cell 205 with respect to the coverage area 300. Device 10 can then determine whether or not to monitor or register with an overlapping coverage area depending on its location with coverage area 300.

For example, referring now to Fig. 2, when device 10 is in position "A", it is located in cell 211. Cell 211 is an area in which coverage area 201 and coverage area 202 overlap. Nevertheless, assuming that device 10 is already associated with coverage area 201, there is little need for device 10 to monitor coverage area 202 because cell 211 is not on the edge of coverage area 201. Cell 211 is bordered on each side by other cells 205 of coverage area 201. Device 10 can not leave coverage area 201 without first passing through a cell 205 that is on the edge of coverage area 201. Accordingly, the AP 213 will broadcast an information element to cell 211 informing all devices therein that they are not in a cell located on the edge of coverage area 201. Device 10 upon receiving the information element can then enter or remain in a standby mode, during which it will not monitor coverage area 202.

On the other hand, when device 10 is in position "B", it is located in cell 215. Cell 215 is on the edge of coverage area 201. It is therefore possible for device 10 to leave coverage area 201 without passing through another cell 205. Accordingly AP 217 will broadcast an information element to cell 215 informing all devices therein that they are on the edge of coverage area 201. Device 10 upon receiving this information will then begin to take whatever action necessary to begin associating with coverage area 202, such as providing it with registration information or otherwise monitoring the network.

A more detailed description will now be provided for handover between coverage area 201 and coverage area 202. For simplicity, coverage areas 201 will be a WiFi (802.11) network and coverage area 202 will be a GERAN network. However, the description can be applied to any mobility use situation involving any relevant RAT such as W-CDMA, CDMA, Bluetooth, UWB, etc.

In location "A", while using the WiFi RAT and moving within WiFi coverage, device 10 might handover to another WiFi cell (i.e. same RAT), but it does not need to hand over to the GERAN network, except in a very exceptional situation, such as the sudden loss of WLAN coverage. Consequently, when located in A, the device 10 does not need to monitor the GERAN network for information. In location B, however, while using the WiFi RAT and moving within the WiFi coverage, device 10 might move out of the WiFi coverage. Device 10 needs to be prepared to handover to GERAN. Therefore, device 10 should monitor the GERAN network for information.

Accordingly, the APs 205 within the WiFi network will broadcast a network topology advertisement information element in the WiFi (802.11) beacon. Device 10 will know, when it is located in position "A", that the probability of it losing WiFi coverage is very low, and therefore it will either not periodically monitor the GERAN network for information collection. Power consumption will be reduced. Conversely, device 10 will know, when it is located in position "B", that it is at the edge of the WiFi coverage, and that the probability of losing WiFi coverage is relatively higher. Device 10 will therefore monitor the GERAN RAT in order to collect relevant information and to be prepared for handover to GERAN.

Alternatively, device 10 can apply different polices to receipt of the information element than simply collecting or not collecting information. For instance, when located in position "A", device 10 could perform a very low rate GERAN scan or reduce the time period during which it monitors the GERAN network. When located in position "B", device 10 could scan the GERAN network once to collect required information or perform a higher rate GERAN scan.

The device's behavior can also depend on its activity. For instance, when in IDLE mode, it can choose to avoid any alternate RAT activity. During a call it can choose to engage in a very low rate scan to allow more rapid handovers.

If WiFi coverage becomes low while in position "A" (e.g. due to AP breakdown, interference, etc.), the behavior of the device 10 could also depend on its activity. For instance, in IDLE mode, the device 10 could scan an alternate RAT after expiration of a timer (chosen sufficiently large to avoid ping-pong handovers) and inform user of handover preparation. During a call, if the reduced coverage is anticipated (e.g. received power level below threshold), device 10 could inform user of WiFi link level and either scan for an alternate RAT or register with previous alternate RAT registering information. If it the reduced coverage is not anticipated (AP breakdown), the device 10 could try and register with previously stored alternate RAT information.

An example of a network topology advertisement information element in the context of WiFi networks will now be provided for illustrative purposes.

The beacon frame in an IEEE802.11 system is one of the MAC management frames defined by the standard. There are three types of MAC frames: management, control (e.g. acknowledgement, power saving, etc.), and data. The general format of a MAC management frame in IEEE802.11-1999 is:

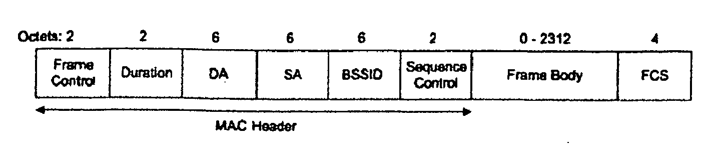

The definition of the MAC header is the same for all management frames. However the frame body consists of fixed fields (fixed length and mandatory frame body components) and information elements (variable length and/or optional frame body components) defined for each management frame subtype (e.g. beacon). Defining a new information element will not hurt legacy devices since it is stated in the IEEE802.11 standard that stations encountering an element type they do not understand shall ignore that element. Hence this information will be used by compliant devices only.

An exemplary format for the information element is:

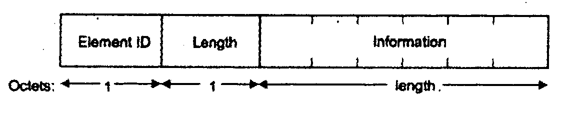

One approach for the definition of the information element is to have a 1 byte information field. One bit in the information field could be set to 1 when the WiFi access point is located at the edge of the WiFi coverage, and set to 0 otherwise.

In another example, additional information could be inserted, such as an indication on the size of the current cell (large vs. small, campus vs. enterprise). Such information could help in deciding the periodicity used to scan for alternate WiFi access points, in order to prepare for inter WiFi access points handovers (intra WiFi RAT handover). Another example of additional information could be for isolated cells. For instance, indicating that there is no other WiFi access point available (belonging to the same operator) could trigger the device 10 not to scan for alternate WiFi access points.

Another exemplary format for a network topology field is shown below:

| | **Border Cell** | **Cell Size** | **Mobile Cell** | **Preemption** | **Reserved** |
|---|---|---|---|---|---|
| **Bit:** | **0-1** | **2-3** | **4** | **5** | **6-7** |

The Border Cell field (bit 0-1) indicates whether the device 10 is associated with an AP which is located at the border of the coverage area. A value of "0" indicates that this information is not available at the level of the AP side. A value of "1" indicates that the AP is located at the border of the coverage. A value of "2" indicates that the AP is not at the border of the coverage. The value of "3" is reserved.

The Cell Size field (bit 2-3) gives an indication on the cell size. Rather than providing precise information on the cell size, the field indicates the kind of environment of the AP. An AP in an office environment (indoor) should indicate a small cell size, while an AP in a campus (outdoor) should indicate a large cell size. A value of 0 indicates that this information is not available at the level of the AP side. A value of 1 indicates that the device 10 is in a small cell. A value of 2 indicates that the device 10 is in a large cell. The value of 3 is reserved.

The Mobile Cell (bit 4) field gives an indication on the mobility of the cell. A value of 0 indicates that the cell is not a moving cell. A value of 1 indicates that the cell itself moves, which is the case if for instance the AP is located in a train, a plane, etc. If the information is unknown at the level of the AP, the value of 0 shall be used.

The Pre-emption (bit 5) field gives an indication on whether the device 10 should monitor external networks or not. This information basically tells the device 10 that radiation due to external networks should be avoided. This is the case, for instance, on a plane, where wireless activity is usually avoided. By using this information field, the device 10 is invited to avoid external network activity. In one example, this information is informative, and how the device 10 actually uses it is implementation dependent. A value of "0" indicates that no pre-emption is required (default value). A value of "1" indicates pre-emption, i.e. external network activity should be avoided.

In order to be able to send the correct information element, it is necessary to first configure the AP 20. Configuration of the AP can be centralized or distributed.

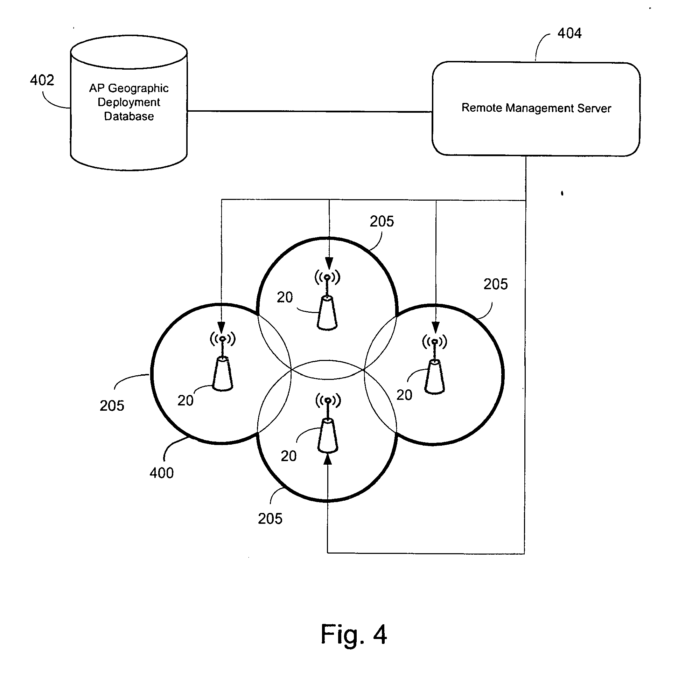

Referring to Fig. 4, an exemplary approach to centralized configuration will now be provided for illustrative purposes.

In one example, a network coverage area 400 contains a plurality of APs 20. The network also includes a geographic deployment database 402 and a remote management server 404. The geographic deployment database 402 includes information identifying the geographic location of each AP 20. This information is provided to the remote management server 404, which can generate an information element for each AP 20. The remote management server provides this information to each AP 20, which can then broadcast it to its corresponding cell. If a particular AP breaks down, the remote management server 404 will receive this information from the deployment database 402 and update each information element if necessary.

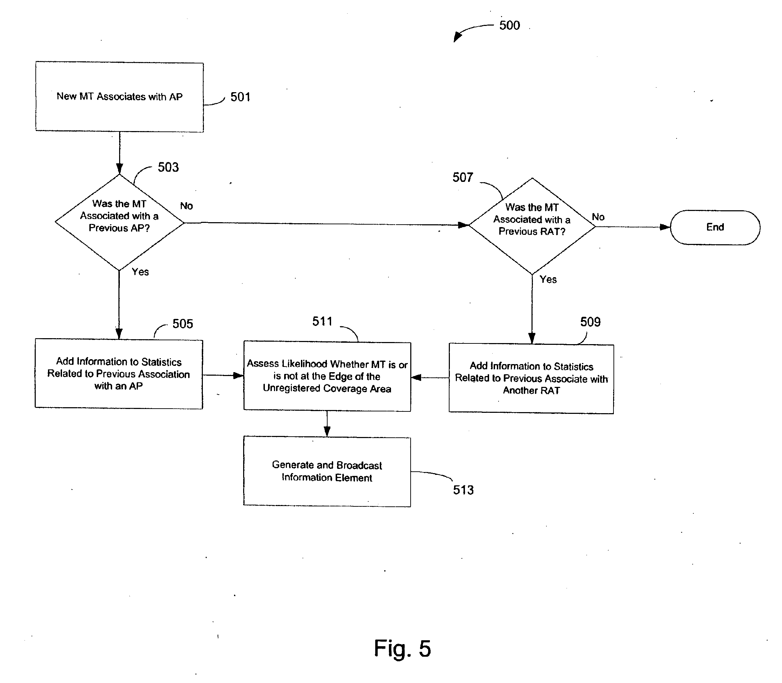

Referring to Fig. 5, an exemplary method for distributed configuration will be provided for illustrative purposes.

In one example, each wireless device 10 provides information to the AP 20 governing the cell in which it is located. The AP 20 then utilizes this information to determine whether it is at the edge of a coverage area or not. For instance, the AP 20 can use re-association/association MAC frames to decide if the MT was previously with another AP or another RAT. Alternatively, a unique information exchange protocol (above 802.11 MAC layer) can be used for the wireless device to notify the AP 20 if it was previously associated with another AP 20 or another RAT. By using this information, the AP 20 can compute statistics on the origins of the entering devices 10, and decide whether it is at the edge of the coverage area or not. In addition, it can compute a likelihood indicator that can be transmitted in the information element to provide the devices 10 with an indicator of the reliability of the information.

The process 500 begins in step 501 in which a device 10 associates with an AP 20. In step 503, coverage limit component 24 determines, from the information transmitted from the device 10, whether the device 10 was associated with a previous AP. If the answer is yes, this information is added, in step 505, to a database in the AP in the AP which contains all such statistics from the various devices that have entered the cell governed by the AP 20. If the answer is no, then in step 507, the coverage limit component 24 determines, from the information transmitted from device 10, whether device 10 was associated with another RAT. If the answer is no, the process 500 ends. Otherwise, if the answer is yes, then in step 509, the coverage limit component adds the information a database in the AP, which contains such statistics from the various devices in the cell governed by the AP 20. In step, 511, the coverage limit component, utilizes the information stored in the database to assess whether the cell in which it resides is located on the edge of the coverage area or not. In one example, step 511 is performed by as follows:

When initialized, the AP 20 will consider itself as "at the border". The AP 20 will then generate statistics based on information it receives and will switch its information element and coverage limit status to "not at the border" if a certain percentage of MTs associating with AP 20 come from the same RAT. In order to accurately assess whether or not it is "not on the border the percentage should be set relatively high (e.g. 85 %). Further, before making the determination that it is "not at the border", the AP should collect data regarding a number of associations. Information from at least 100 associations would provide a sufficient data sample, but the determination would be more accurate with a larger number af associations (e.g. 200). It should be noted, however, that the values used in the preceding analysis have been provided for illustrative purposes as particularly useful, but are not meant to limit the scope of the application.

In addition, it should be noted that other types of information could be provided to the AP 20, which it could utilize to determine its relative location within a network coverage area. For instance, a device 10 could provide the AP 20 with a re-association message, thereby letting the AP know that the device 10 was previously associated with the same RAT. In another example, a device 10 can notify an AP 20, when leaving its coverage area, whether the device 10 will remain associated with the same RAT or change to a different RAT. In a further example, one AP 20 could receive information from another AP 20; e.g. when a device 10 re-associates with an AP 20, the AP is could notify the previous AP20 that the device has switched to a new AP 20. Thus, the previous AP knows the device 10 has left its coverage, but within the same RAT.

Finally, referring further to Fig. 5, in step 513, after the coverage limit component determines whether or not the cell is located near the edge of the coverage limit, the coverage limit component generates the information element and begins to broadcast the information element over the interface 22. Process 500 can performed each time a new device associates with AP 20 or after some other user defined interval.

While particular embodiments have been shown and described, it will be apparent to those skilled in the art that changes and modifications may be made without departing from the principles set forth herein. The matter set forth in the foregoing description and accompanying drawings is offered by way of illustration only and not as a limitation.

## Claims

1. A method, comprising:
providing a plurality of cells (205) within a first wireless network (201) coverage area; **characterized in that** it further comprise:
receiving information from at least one of a mobile device (10) or a deployment database (402), wherein the information indicates at least one of a geographic location of an access point (20), or association of the mobile device (10) with a cell in at least one of the first wireless network (201) or a second wireless network (202);
generating an information element based on the received information; and
broadcasting the information element to at least one of the cells (205), wherein the information element identifies a position of the cell relative to the first wireless network (201) coverage area.

2. The method of claim 1, further comprising:
receiving information from at least one mobile device (10) within the coverage area; and
utilizing the information to determine the position of the cell relative to the wireless network (201, 202) coverage area.

3. The method of claim 2, wherein the step of receiving information comprises:
receiving an indicator from the mobile device (10) as to whether the mobile device was associated with another cell (205) within the wireless network (201, 202) coverage area prior to associating with the cell.

4. The method of claim 2, wherein the step of receiving information comprises:
receiving an indicator from the mobile device (10) as to whether the mobile device was associated with another wireless network (201, 202) coverage area prior to associating with the cell.

5. The method of claim 1, further comprising:
providing an access point (20) that transmits wireless signals to the cell (205); and
sending the information element to the access point (20) for later broadcast to the at least one cell.

6. The method of claim 5, further comprising:
receiving information, from a deployment database (402), that includes geographical information related to the access point (20); and
utilizing the information to determine the position of the cell relative to the wireless network (201, 202) coverage area.

7. The method of claim 1, further comprising:
providing a plurality of access points (20), wherein each access point transmits wireless signals to a corresponding one of the plurality of cells (205);
receiving a notification that one of the access points (20) has broken down; and
utilizing the notification to determine the position of the cell (205) relative to the wireless network (201, 202) coverage area.

8. A method, comprising:
establishing communication with a cell (205) within a first wireless network (201); **characterized in that** it further comprises:
transmitting information that indicates at least one of a geographic location of an access point (20), or association of a mobile device (10) with a cell in at least one of the first wireless network(202) or a second wireless network (202);
receiving an information element that identifies a relative location of the cell (205) within the first wireless network (201), wherein the information element is determined based on the transmitted association information; and
utilizing the information element to determine whether or not to monitor the second wireless network.

9. The method of claim 8, wherein the step of utilizing the information element comprises:
monitoring the second wireless network (202) in response to a determination that the cell (205) is located in a predetermined area of the first wireless network (201).

10. The method of claim 9, further comprising:
determining that the cell (205) is located in a peripheral area of the first wireless network (201).

11. The method of claim of claim 9, wherein the step of monitoring the second wireless network (202) comprises:
registering with the second wireless network (202).

12. The method of claim 8, wherein the step of utilizing the information element comprises:
determining not to monitor the second wireless network (202) in response to a determination that the cell (205) is not located in a predetermined area of the first wireless network (201).

13. The method of claim 8, further comprising:
sending an indicator to an access point (20) servicing the cell notifying the access point of previous association with another cell or another wireless network.

14. A network, comprising:
a wireless network (201, 202) coverage area including at least one cell (205);
at least one network access point (20) that provides wireless service to the at least one cell (205), **characterized in that** at least one of the network access point (20) is configured to receive association information from at least one of a mobile device (10) and a deployment database (402), to generate an information element based on the received association information, and to broadcast the information element identifying a position of the cell (205) relative to the wireless network (201, 202) coverage area.

15. The network of claim 14, wherein the network access point (20) is configured to receive information from at least one mobile device (10) within the coverage area to utilize the information to determine the position of the cell relative to the wireless network (201, 202) coverage area.

16. The network of claim 15, wherein the network access point (20) is further configured to receive an indicator from the mobile device (10) as to whether the mobile device was associated with another cell (205) within the wireless network (201, 202) coverage area prior to associating with the cell.

17. The network of claim 15, wherein the network access point (20) is further configured to receive an indicator from the mobile device (10) as to whether the mobile device was associated with another wireless network (201, 202) coverage area prior to associating with the cell.

18. The network of claim 14, further comprising:
a management server (404) that sends the information element to the access point (20) for broadcast by the access point

19. The network of claim 18, further comprising:
a deployment database (402) that includes geographical information related to the access point (20); wherein the management server (404) is configured to receive the geographical information from the deployment database (402) and utilize the geographical information to determine the position of the cell (205) relative to the wireless network (201, 202) coverage area.

20. The network of claim 14, wherein the at least one cell (205) comprises a plurality of cells and the at least one access point (20) comprises a plurality of access points, and further wherein the management server (404) is configured to receive a notification if one of the access points (20) breaks down and to utilize the notification to determine the position of the cell relative to the wireless network (201, 202) coverage area.

21. A mobile communications device, comprising:
an interface (18) to connect the mobile device (10) to a plurality of wireless networks (201, 202);
a processor (13) coupled to the interface (18), wherein the processor is operable to transmit information that indicates at least one of a geographic location of an access point (20), or association of the mobile device (10) with a cell (205) in at least one of a first wireless network (201) or a second wireless network (202), to receive an information element, determined based on the transmitted information, that identifies a relative location of a cell (205) within one wireless network (201, 202) and to utilize the information element to determine whether or not to establish communication with another wireless network (201, 202).

22. The mobile communications device of claim 21, wherein the processor (13) is operable to determine to monitor the other wireless network (201, 202) in response to a determination that the cell (205) is located in a predetermined area of the one wireless network (201, 202).

23. The mobile communications device of claim 22, wherein the processor (13) is operable determine to monitor the other wireless network (201, 202) in response to a determination that the cell is located in a peripheral area of the one wireless network.

24. The mobile communications device of claim 22, wherein the processor (13) is operable to register with the other wireless network in response to a determination that cell is located in a predetermined area of the one wireless network (201, 202).

25. The mobile communications device of claim 21, wherein the processor (13) is operable to determine not to monitor the other wireless network in response to a determination that the cell (205) is not located in a predetermined area of the one wireless network.

26. The mobile communications device of claim 21, wherein the processor (13) is operable to send an indicator to an access point (20) servicing the cell (205) notifying the access point of previous association with another cell (205) or wireless network (201, 202).

## Patentansprüche

1. Verfahren, umfassend:
Bereitstellen mehrerer Zellen (205) innerhalb eines Versorgungsbereichs eines ersten Funknetzes (201); **dadurch gekennzeichnet, daß** es ferner umfaßt:
Empfangen von Information von wenigstens einem von einem mobilen Gerät (10) oder einer Aufstellungsdatenbank (402), wobei die Information wenigstens eines angibt von einem geographischen Ort eines Zugangspunkts (20) oder einer Zuordnung des mobilen Geräts (10) zu einer Zelle in wenigstens einem von dem ersten Funknetz (201) oder einem zweiten Funknetz (202);
Erzeugen eines Informationselements auf Basis der empfangenen Information; und
Aussenden des Informationselements an wenigstens eine der Zellen (205), wobei das Informationselement eine Position der Zelle relativ zu dem Versorgungsbereich des ersten Funknetzes (201) identifiziert.

2. Verfahren nach Anspruch 1, ferner umfassend:
Empfangen von Information von wenigstens einem mobilen Gerät (10) innerhalb des Versorgungsbereichs; und
Benutzen der Information, um die Position der Zelle relativ zu dem Versorgungsbereich des Funknetzes (201, 202) zu bestimmen.

3. Verfahren nach Anspruch 2, wobei der Schritt des Empfangens von Information umfaßt:
Empfangen eines Indikators von dem mobilen Gerät (10), ob das mobile Gerät einer weiteren Zelle (205) innerhalb des Versorgungsbereichs des Funknetzes (201, 202), vor Zuordnen zu der Zelle, zugeordnet worden ist.

4. Verfahren nach Anspruch 2, wobei der Schritt des Empfangens von Information umfaßt:
Empfangen eines Indikators von dem mobilen Gerät (10), ob das mobile Gerät einem weiteren Versorgungsbereich eines Funknetzes (201, 202), vor Zuordnen zu der Zelle, zugeordnet worden ist.

5. Verfahren nach Anspruch 1, ferner umfassend:
Bereitstellen eines Zugangspunkts (20), welcher Funksignale an die Zelle (205) überträgt; und
Senden des Informationselements an den Zugangspunkt (20) für späteres Aussenden an die wenigstens eine Zelle.

6. Verfahren nach Anspruch 5, ferner umfassend:
Empfangen von Information aus einer Aufstellungsdatenbank (402), welche geographische Information bezogen auf den Zugangspunkt (20) enthält; und
Benutzen der Information, um die Position der Zelle relativ zu dem Versorgungsbereich des Funknetzes (201, 202) zu bestimmen.

7. Verfahren nach Anspruch 1, ferner umfassend:
Bereitstellen mehrerer Zugangspunkte (20), wobei jeder Zugangspunkt Funksignale zu einer entsprechenden der mehreren Zellen (205) überträgt;
Empfangen einer Benachrichtigung, wenn einer der Zugangspunkte (20) ausgefallen ist; und
Benutzen der Benachrichtigung, um die Position der Zelle (205) relativ zu dem Versorgungsbereich des Funknetzes (201, 202) zu bestimmen.

8. Verfahren, umfassend:
Herstellen von Kommunikation mit einer Zelle (205) innerhalb eines ersten Funknetzes (201); **dadurch gekennzeichnet, daß** es ferner umfaßt:
Übertragen von Information, welche wenigstens eines angibt von einem geographischen Ort eines Zugangspunkts (20) oder einer Zuordnung eines mobilen Geräts (10) zu einer Zelle in wenigstens einem von dem ersten Funknetz (202) oder einem zweiten Funknetz (202);
Empfangen eines Informationselements, welches einen relativen Ort der Zelle (205) innerhalb des ersten Funknetzes (201) identifiziert, wobei das Informationselement auf Basis der übertragenen Zuordnungsinformation bestimmt wird; und
Benutzen des Informationselements, um zu bestimmen, ob das zweite Funknetz zu überwachen ist oder nicht.

9. Verfahren nach Anspruch 8, wobei der Schritt des Benutzens des Informationselements umfaßt:
Überwachen des zweiten Funknetzes (202) infolge eines Bestimmens, daß die Zelle (205) sich in einem vorbestimmten Bereich des ersten Funknetzes (201) befindet.

10. Verfahren nach Anspruch 9, ferner umfassend:
Bestimmen, daß die Zelle (205) sich in einem peripheren Bereich des ersten Funknetzes (201) befindet.

11. Verfahren nach Anspruch 9, wobei der Schritt des Überwachens des zweiten Funknetzes (202) umfaßt:
Anmelden im zweiten Funknetz (202).

12. Verfahren nach Anspruch 8, wobei der Schritt des Benutzens des Informationselements umfaßt:
Bestimmen, daß das zweite Funknetz (202) nicht zu überwachen ist, infolge eines Bestimmens, daß die Zelle (205) sich nicht in einem vorbestimmten Bereich es ersten Funknetzes (201) befindet.

13. Verfahren nach Anspruch 8, ferner umfassend:
Senden eines Indikators an einen Zugangspunkt (20), welcher die Zelle bedient, zum Benachrichtigen des Zugangspunkts von einer vorhergehenden Zuordnung zu einer weiteren Zelle oder zu einem weiteren Funknetz.

14. Netz, umfassend:
einen Versorgungsbereich eines Funknetzes (201, 202), welcher wenigstens eine Zelle (205) enthält;
wenigstens einen Netzzugangspunkt (20), welcher Funkdienste für wenigstens eine Zelle (205) bereitstellt, **dadurch gekennzeichnet, daß** der wenigstens eine Netzzugangspunkt (20) gestaltet ist zum Empfangen von Zuordnungsinformation von wenigstens einem von einem mobilen Gerät (10) und einer Aufstellungsdatenbank (402), zum Erzeugen eines Informationselements auf Basis der empfangenen Zuordnungsinformation, und zum Aussenden des Informationselements, welches eine Position der Zelle (205) relativ zu dem Versorgungsbereich des Funknetzes (201, 202) identifiziert.

15. Netz nach Anspruch 14, wobei der Netzzugangspunkt (20) gestaltet ist zum Empfangen von Information von wenigstens einem mobilen Gerät (10) innerhalb des Versorgungsbereichs, und zum Benutzen der Information, um die Position der Zelle relativ zu dem Versorgungsbereich des Funknetzes (201, 202) zu bestimmen.

16. Netz nach Anspruch 15, wobei der Netzzugangspunkt (20) ferner gestaltet ist zum Empfangen eines Indikators von dem mobilen Gerät (10), ob das mobile Gerät einer weiteren Zelle (205) innerhalb des Versorgungsbereichs des Funknetzes (201, 202), vor Zuordnen zu der Zelle, zugeordnet worden ist.

17. Netz nach Anspruch 15, wobei der Netzzugangspunkt (20) ferner gestaltet ist zum Empfangen eines Indikators von dem mobilen Gerät (10), ob das mobile Gerät einem weiteren Versorgungsbereich des Funknetzes (201, 202), vor Zuordnen zu der Zelle, zugeordnet worden ist.

18. Netz nach Anspruch 14, ferner umfassend:
einen Verwaltungsserver (404), welcher das Informationselement an den Zugangspunkt (20) sendet, zum Aussenden durch den Zugangspunkt.

19. Netz nach Anspruch 18, ferner umfassend:
eine Aufstellungsdatenbank (402), welche geographische Information bezogen auf den Zugangspunkt (20) enthält; wobei der Verwaltungsserver (404) gestaltet ist zum Empfangen der geographischen Information aus der Aufstellungsdatenbank (402), und zum Benutzen der geographischen Information, um die Position der Zelle (205) relativ zu dem Versorgungsbereich des Funknetzes (201, 202) zu bestimmen.

20. Netz nach Anspruch 14, wobei die wenigstens eine Zelle (205) mehrere Zellen umfaßt, und der wenigstens eine Zugangspunkt (20) mehrere Zugangspunkte umfaßt, und wobei ferner der Verwaltungsserver (404) gestaltet ist zum Empfangen einer Benachrichtigung, wenn einer der Zugangspunkte (20) ausfällt, und zum Benutzen der Benachrichtigung, um die Position der Zelle relativ zu dem Versorgungsbereich des Funknetzes (201, 202) zu bestimmen.

21. Mobiles Kommunikationsgerät, umfassend:
eine Schnittstelle (18) zum Verbinden des mobilen Geräts (10) mit mehreren Funknetzen (201, 202);
einen Prozessor (13), gekoppelt mit der Schnittstelle (18), wobei der Prozessor geeignet ist zum Übertragen von Information, welche wenigstens eines angibt von einem geographischen Ort eines Zugangspunkts (20) oder einer Zuordnung des mobilen Geräts (10) zu einer Zelle (205) in wenigstens einem von einem ersten Funknetz (201) oder einem zweiten Funknetz (202), zum Empfangen eines Informationselements, welches auf Basis der übertragenen Information bestimmt wird, und welches einen relativen Ort einer Zelle (205) innerhalb eines Funknetzes (201, 202) identifiziert, und zum Benutzen des Informationselements, um zu bestimmen, ob Kommunikation mit einem weiteren Funknetz (201, 202) herzustellen ist oder nicht.

22. Mobiles Kommunikationsgerät nach Anspruch 21, wobei der Prozessor (13) geeignet ist zum Bestimmen, daß das weitere Funknetz (201, 202) zu überwachen ist, infolge eines Bestimmens, daß die Zelle (205) sich in einem vorbestimmten Bereich des einen Funknetzes (201, 202) befindet.

23. Mobiles Kommunikationsgerät nach Anspruch 22, wobei der Prozessor (13) geeignet ist zum Bestimmen, daß das weitere Funknetz (201, 202) zu überwachen ist, infolge eines Bestimmens, daß die Zelle sich in einem peripheren Bereich des einen Funknetzes befindet.

24. Mobiles Kommunikationsgerät nach Anspruch 22, wobei der Prozessor (13) geeignet ist zum Anmelden in dem weiteren Funknetz, infolge eines Bestimmens, daß die Zelle sich in einem vorbestimmten Bereich des einen Funknetzes (201, 202) befindet.

25. Mobiles Kommunikationsgerät nach Anspruch 21, wobei der Prozessor (13) geeignet ist zum Bestimmen, daß das weitere Funknetz nicht zu überwachen ist, infolge eines Bestimmens, daß die Zelle (205) sich nicht in einem vorbestimmten Bereich des einen Funknetzes befindet.

26. Mobiles Kommunikationsgerät nach Anspruch 21, wobei der Prozessor (13) geeignet ist zum Senden eines Indikators an einen Zugangspunkt (20), welcher die Zelle (205) bedient, zum Benachrichtigen des Zugangspunkts von einer vorhergehenden Zuordnung zu einer weiteren Zelle (205) oder zu einem weiteren Funknetz (201, 202).

## Revendications

1. Procédé comprenant :
la prévision d'une pluralité de cellules (205) dans la zone de couverture d'un premier réseau sans fil (201) ; **caractérisé en ce qu'**il comprend en outre :
la réception d'informations en provenance d'au moins un dispositif mobile (10) ou d'une base de données de déploiement (402), lesquelles informations indiquent au moins une position géographique d'un point d'accès (20) ou l'association du dispositif mobile (10) à une cellule située au moins dans le premier réseau sans fil (201) ou dans un deuxième réseau sans fil (202) ;
la génération d'un élément d'information à partir des informations reçues ; et
la diffusion de l'élément d'information vers au moins l'une des cellules (205), lequel élément d'information identifie une position de la cellule par rapport à la zone de couverture du premier réseau sans fil (201).

2. Procédé selon la revendication 1, comprenant en outre :
la réception d'informations en provenance d'au moins un dispositif mobile (10) se trouvant dans la zone de couverture ; et
l'utilisation des informations pour déterminer la position de la cellule par rapport à la zone de couverture du réseau sans fil (201, 202).

3. Procédé selon la revendication 2, dans lequel l'étape de réception d'informations comprend :
la réception d'un indicateur en provenance du dispositif mobile (10) indiquant si le dispositif mobile était associé à une autre cellule (205) située dans la zone de couverture du réseau sans fil (201, 202) avant d'être associé à la cellule.

4. Procédé selon la revendication 2, dans lequel l'étape de réception d'informations comprend :
la réception d'un indicateur en provenance du dispositif mobile (10) indiquant si le dispositif mobile était associé à la zone de couverture d'un autre réseau sans fil (201, 202) avant d'être associé à la cellule.

5. Procédé selon la revendication 1, comprenant en outre :
la prévision d'un point d'accès (20) qui transmet des signaux sans fil à la cellule (205) ; et
l'envoi de l'élément d'information au point d'accès (20) pour sa diffusion ultérieure à ladite au moins une cellule.

6. Procédé selon la revendication 5, comprenant en outre :
la réception d'informations, en provenance d'une base de données de déploiement (402), qui comprennent des informations géographiques concernant le point d'accès (20) ; et
l'utilisation des informations pour déterminer la position de la cellule par rapport à la zone de couverture du réseau sans fil (201, 202).

7. Procédé selon la revendication 1, comprenant en outre :
la prévision d'une pluralité de points d'accès (20), chaque point d'accès transmettant des signaux sans fil à une cellule correspondante de la pluralité de cellules (205) ;
la réception d'une notification du fait que l'un des points d'accès (20) est tombé en panne ; et
l'utilisation de la notification pour déterminer la position de la cellule (205) par rapport à la zone de couverture du réseau sans fil (201, 202).

8. Procédé comprenant :
l'établissement d'une communication avec une cellule (205) située dans un premier réseau sans fil (201) ; **caractérisé en ce qu'**il comprend en outre :
la transmission d'informations qui indiquent au moins une position géographique d'un point d'accès (20) ou l'association du dispositif mobile (10) à une cellule située dans le premier réseau sans fil (202) ou dans un deuxième réseau sans fil (202) ;
la réception d'un élément d'information qui identifie une position relative de la cellule (205) dans le premier réseau sans fil (201), lequel élément d'information étant déterminé à partir des informations d'association transmises ; et
l'utilisation de l'élément d'information pour déterminer s'il convient ou non de surveiller le deuxième réseau sans fil.

9. Procédé selon la revendication 8, dans lequel l'étape d'utilisation de l'élément d'information comprend :
la surveillance du deuxième réseau sans fil (202) en réponse à une détermination du fait que la cellule (205) est située dans une zone prédéterminée du premier réseau sans fil (201).

10. Procédé selon la revendication 9, comprenant en outre :
la détermination du fait que la cellule (205) est située dans une région périphérique du premier réseau sans fil (201).

11. Procédé selon la revendication 9, dans lequel l'étape de surveillance du deuxième réseau sans fil (202) comprend :
l'enregistrement auprès du deuxième réseau sans fil (202).

12. Procédé selon la revendication 8, dans lequel l'étape d'utilisation de l'élément d'information comprend :
la détermination du fait qu'il ne faut pas surveiller le deuxième réseau sans fil (202) en réponse à une détermination du fait que la cellule (205) n'est pas située dans une zone prédéterminée du premier réseau sans fil (201).

13. Procédé selon la revendication 8, comprenant en outre :
l'envoi d'un indicateur à un point d'accès (20) desservant la cellule, lequel indicateur notifiant au point d'accès une association antérieure à une autre cellule ou un autre réseau sans fil.

14. Réseau, comprenant :
une zone de couverture d'un réseau sans fil (201, 202) comprenant au moins une cellule (205) ;
au moins un point d'accès au réseau (20) qui fournit un service sans fil à ladite au moins une cellule (205), **caractérisé en ce que** l'au moins un point d'accès au réseau (20) est configuré pour recevoir des informations d'association en provenance d'au moins un dispositif mobile (10) et d'une base de données de déploiement (402), pour générer un élément d'information à partir des informations d'association reçues, et pour diffuser l'élément d'information identifiant une position de la cellule (205) par rapport à la zone de couverture du réseau sans fil (201, 202).

15. Réseau selon la revendication 14, dans lequel le point d'accès au réseau (20) est configuré pour recevoir des informations en provenance d'au moins un dispositif mobile (10) situé dans la zone de couverture et utiliser les informations pour déterminer la position de la cellule par rapport à la zone de couverture du réseau sans fil (201, 202).

16. Réseau selon la revendication 15, dans lequel le point d'accès au réseau (20) est en outre configuré pour recevoir un indicateur en provenance du dispositif mobile (10) concernant le fait que le dispositif mobile était ou non associé à une autre cellule (205) située dans la zone de couverture du réseau sans fil (201, 202) avant d'être associé à la cellule.

17. Réseau selon la revendication 15, dans lequel le point d'accès au réseau (20) est en outre configuré pour recevoir un indicateur en provenance du dispositif mobile (10) indiquant si le dispositif mobile était associé à la zone de couverture d'un autre réseau sans fil (201, 202) avant d'être associé à la cellule.

18. Réseau selon la revendication 14, comprenant en outre :
un serveur de gestion (404) qui envoie l'élément d'information au point d'accès (20) pour sa diffusion par le point d'accès.

19. Réseau selon la revendication 18, comprenant en outre :
une base de données de déploiement (402) qui comprend des informations géographiques concernant le point d'accès (20) ; le serveur de gestion (404) étant configuré pour recevoir les informations géographiques en provenance de la base de données de déploiement (402) et utiliser les informations géographiques pour déterminer la position de la cellule (205) par rapport à la zone de couverture du réseau sans fil (201, 202).

20. Réseau selon la revendication 14, dans lequel ladite au moins une cellule (205) comprend une pluralité de cellules et ledit au moins point d'accès (20) comprend une pluralité de points d'accès, et dans lequel, en outre, le serveur de gestion (404) est configuré pour recevoir une notification si l'un des points d'accès (20) tombe en panne et utiliser la notification pour déterminer la position de la cellule par rapport à la zone de couverture du réseau sans fil (201, 202).

21. Dispositif de communication mobile, comprenant :
une interface (18) pour connecter le dispositif mobile (10) à une pluralité de réseaux sans fil (201, 202) ;
un processeur (13) couplé à l'interface (18), lequel le processeur peut être utilisé pour transmettre des informations qui indiquent au moins une position géographique d'un point d'accès (20) ou l'association du dispositif mobile (10) à une cellule (205) située dans au moins dans le premier réseau sans fil (201) ou dans un deuxième réseau sans fil (202), recevoir un élément d'information, déterminé à partir des informations transmises, qui identifie une position relative d'une cellule (205) dans un réseau sans fil (201, 202), et utiliser l'élément d'information pour déterminer s'il faut ou non établir une communication avec un autre réseau sans fil (201,202).

22. Dispositif de communication mobile selon la revendication 21, dans lequel le processeur (13) peut être utilisé pour surveiller l'autre réseau sans fil (201, 202) en réponse à une détermination du fait que la cellule (205) est située dans une zone prédéterminée du premier réseau sans fil (201, 202).

23. Dispositif de communication mobile selon la revendication 22, dans lequel le processeur (13) peut être utilisé pour déterminer s'il faut surveiller l'autre réseau sans fil (201, 202) en réponse à une détermination du fait que la cellule est située dans une zone périphérique du premier réseau sans fil.

24. Dispositif de communication mobile selon la revendication 22, dans lequel le processeur (13) peut être utilisé pour effectuer un enregistrement auprès de l'autre réseau sans fil en réponse à une détermination du fait que la cellule est située dans une zone prédéterminée du premier réseau sans fil (201, 202).

25. Dispositif de communication mobile selon la revendication 21, dans lequel le processeur (13) peut être utilisé pour déterminer qu'il ne faut pas surveiller l'autre réseau sans fil en réponse à une détermination du fait que la cellule (205) n'est pas située dans une zone prédéterminée du premier réseau sans fil.

26. Dispositif de communication mobile selon la revendication 21, dans lequel le processeur (13) peut être utilisé pour envoyer un indicateur à un point d'accès (20) servant la cellule (205), lequel indicateur notifiant au point d'accès une association antérieure à une autre cellule (205) ou un autre réseau sans fil (201, 202).
